# EUROPEAN PATENT APPLICATION

(11) **EP 4 664 635 A1**
(43) Date of publication of application: **17.12.2025**
(21) Application number: 24852432.4
(22) Date of filing: 14.03.2024
(51) Int. Cl.: H01M 50/242, H01M 50/502, H01M 50/569, H01M 50/519, H01M 50/15, H01M 50/30, H01M 50/209

(54) **BATTERY MODULE COMPRISING BUSBAR ASSEMBLY AND BATTERY PACK COMPRISING SAME**

(30) Priority: 04.08.2023 KR 20230102300
(71) Applicant: SK On Co., Ltd., Seoul 03161 (KR)
(72) Inventor: GOO, Bon-A, Daejeon 34124 (KR); DO, Won-Seok, Daejeon 34124 (KR); PARK, Sin-Ho, Daejeon 34124 (KR); KIM, Seong-Jun, Daejeon 34124 (KR); LEE, Woo-Jin, Daejeon 34124 (KR)
(74) Representative: Stolmár & Partner Patentanwälte PartG mbB
(86) International application number: PCT/KR2024/095495
(87) International publication number: WO 2025/034079

(57) **Abstract**

The present disclosure provides a battery module comprising: a cell assembly including a plurality of battery cells; and a busbar assembly including a busbar electrically connected to at least one of the plurality of battery cells, and a busbar holder including a base located on the cell assembly and a protrusion part extending from the base and connected to the busbar. The plurality of battery cells may include a first battery cell and a second battery cell adjacent to the first battery cell. The busbar may include a first connection part connected to the first battery cell, a second connection part connected to the second battery cell, and a buffer part located between the first connection part and the second connection part. The protrusion part may be connected to the buffer part.

## Description

### Technical Field

The present disclosure relates to a battery module including a busbar assembly and a battery pack including the same.

### Background Art

Unlike primary batteries, secondary batteries may be charged with and discharged of electricity, and thus, may be applied to devices within various fields, such as digital cameras, mobile phones, laptops, hybrid vehicles, electric vehicles, and energy storage systems (ESS). Secondary batteries may be a lithium-ion battery, a nickel-cadmium battery, a nickel-metal hydride battery, or a nickel-hydrogen battery.

Secondary batteries are manufactured as flexible pouchtype battery cells or rigid prismatic or cylindrical can-type battery cells. A plurality of battery cells may be formed as a cell assembly in a stacked form.

The cell assembly may be disposed inside a case to form a battery module, and a plurality of battery modules may be disposed inside a pack frame to form a battery pack.

### Disclosure of Invention

### Technical Problem

A battery module may include a busbar assembly electrically connected to battery cells. For example, a battery module including prismatic battery cells may include a plurality of busbars each connected to the battery cells and a busbar holder connected to the plurality of busbars. The battery cells may expand (e.g., swell) due to overcharge, external impact, or aging, and the battery module may be damaged.

In addition, insulation of the busbar is required to prevent short-circuits due to contact with an external structure. However, if the busbar is connected to the busbar holder using a metal material (e.g., a bolt), an additional structure for insulation may be required.

An aspect of the present disclosure is to provide a battery module and a battery pack, in which, when a battery cell expands, a relative movement of a busbar is absorbed, thereby preventing damage to the battery module.

An aspect of the present disclosure is to provide a battery module and a battery pack, in which a busbar is connected to an insulating component, thereby preventing short circuits and/or shorts.

The battery module and battery pack of the present disclosure may be widely applied in green technology fields, such as electric vehicles, battery charging stations, and solar power generation and wind power generation using batteries. In addition, the battery module and battery pack of the present disclosure may be used in eco-friendly electric vehicles and hybrid vehicles to prevent a climate change by suppressing air pollution and greenhouse gas emissions.

### Solution to Problem

According to an aspect of the present disclosure, a battery module includes a cell assembly including a plurality of battery cells and a busbar assembly including a busbar electrically connected to at least one of the plurality of battery cells and a busbar holder including a base positioned on the cell assembly and a protrusion extending from the base and connected to the busbar. The plurality of battery cells may include a first battery cell and a second battery cell adjacent to the first battery cell. The busbar may include a first connection portion connected to the first battery cell, a second connection portion connected to the second battery cell, and a buffer portion located between the first connection portion and the second connection portion. The protrusion portion may be connected to the buffer portion.

According to an embodiment, the buffer portion may include a first surface contacting the protrusion, a second surface opposite to the first surface, and at least one through-hole penetrating through the first surface and the second surface. The protrusion may include a fusion portion at least partly accommodated within the at least one through-hole.

According to an embodiment, the buffer portion may protrude upwardly of the busbar assembly, as compared to the first connection portion and the second connection portion.

According to an embodiment, the busbar holder may include a high molecular polymer or resin, and the busbar may include copper or aluminum.

According to an embodiment, the busbar holder may include a plurality of slits formed in the base, and the protrusion may be located between the plurality of slits.

According to an embodiment, the battery module may further include a sensor assembly including a body portion disposed on the busbar holder and a plurality of connection portions extending from the body portion and connected to the busbar.

According to an embodiment, each of the plurality of connection portions may be connected to at least one of the first connection portion or the second connection portion of the busbar.

According to an embodiment, the body portion may include at least one of a wire, a printed circuit board, or a flexible printed circuit board.

According to an embodiment, the cell assembly may include a housing including an end plate covering both end portions of the plurality of battery cells and a cover connected to the end plate and covering side surfaces of the plurality of battery cells.

According to an embodiment, the busbar holder may include a plurality of slits formed in the base, and the protrusion may be positioned between the plurality of slits.

According to an embodiment, each of the plurality of battery cells may include an electrode assembly, a case accommodating the electrode assembly, and a cap assembly including a cap plate coupled to the case and sealing the case and a terminal plate electrically connected to the electrode assembly. The first connection portion and the second connection portion may be connected to the terminal plate.

According to an embodiment, each of the plurality of battery cells may include a venting portion formed in the cap assembly, and the base may include a plurality of venting holes located in an upper portion of the venting portion.

According to an embodiment, when the first battery cell or the second battery cell expands, the buffer portion 312 may be deformed and a distance between the first connection portion and the second connection portion may increase.

According to an embodiment, the protrusion may be connected to the buffer portion using thermal fusion.

According to an aspect of the present disclosure, a battery pack includes at least one battery module, a pack frame accommodating the at least one battery module, and a battery controller disposed within the pack frame. The at least one battery module includes a cell assembly including a plurality of battery cells and a busbar assembly including a busbar electrically connected to at least one of the plurality of battery cells and a busbar holder including a base positioned on the cell assembly and a protrusion extending from the base and connected to the busbar. The plurality of battery cells may include a first battery cell and a second battery cell adjacent to the first battery cell. The busbar may include a first connection portion connected to the first battery cell, a second connection portion connected to the second battery cell, and a buffer portion located between the first connection portion and the second connection portion. The protrusion portion may be connected to the buffer portion.

### Advantageous Effects of Invention

According to an embodiment of the present disclosure, when a battery cell expands, damage to a battery module may be reduced.

According to an embodiment of the present disclosure, short circuits or shorts may be prevented in a connection structure of a busbar and a busbar holder.

### Brief Description of Drawings

FIG. 1 is a perspective view of a battery cell, according to an embodiment.
FIG. 2 is a perspective view of a cell assembly, according to an embodiment.
FIG. 3 is a perspective view of a busbar module, according to an embodiment.
FIG. 4 is a perspective view of a busbar assembly to which a sensor assembly is coupled, according to an embodiment.
FIG. 5 is a side view of a battery module, according to an embodiment.
FIG. 6a is a front perspective view of region A of FIG. 4, according to an embodiment. FIG. 6b is a cross-sectional view taken along line A-A' of FIG. 6a, according to an embodiment.
FIG. 7 is a rear perspective view of region A of FIG. 4, according to an embodiment.
FIG. 8 is a schematic diagram of a battery pack, according to an embodiment.

### Best Mode for the Invention

The present disclosure will be described in detail with reference to the accompanying drawings. However, this is merely illustrative and the present disclosure is not limited to the specific embodiments described by way of example.

Terms and words used in the present specification and claims to be described below should not be construed as limited to ordinary or dictionary terms, and should be construed in accordance with the technical idea of the present disclosure based on the principle that the inventors may properly define their own inventions in terms of terms in order to best explain the invention.

Therefore, the embodiments described in the present specification and the configurations illustrated in the drawings are merely the most preferred embodiments of the present disclosure and are not intended to represent all of the technical ideas of the present disclosure, and thus should be understood that various equivalents and modifications may be substituted at the time of the present application.

The detailed description of well-known functions and constructions which may obscure the gist of the present disclosure will be omitted. Some of the elements in the accompanying drawings are exaggerated, omitted, or schematically illustrated, and the size of each element does not entirely reflect the actual size.

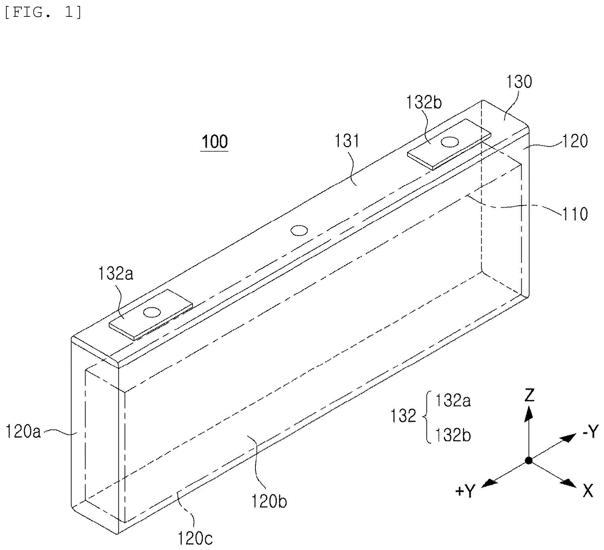

FIG. 1 is a perspective view of a battery cell, according to an embodiment.

Referring to FIG. 1, the battery cell 100 may be a secondary battery cell (e.g., a prismatic secondary battery cell). For example, the battery cell 100 may be a lithium ion battery, but is not limited thereto. For example, the battery cell 100 may be a nickel-cadmium electric, nickel-metal hydride battery, or nickel-hydrogen battery that may be charged with and discharged of electricity. The battery cell 100 may include an electrode assembly 110, a case 120, and a cap assembly 130.

The electrode assembly 110 may include a cathode plate, an anode plate, and a separator. The separator may prevent contact between the cathode plate and the anode plate. A person skilled in the art will understand that the electrode assembly 110 may be manufactured using various methods. According to embodiments, a positive electrode, a negative electrode, and the separator may be repeatedly arranged to form an electrode assembly. In some embodiments, the electrode assembly may be a winding type, a stacking type, a Z-folding type, or a stack-folding type electrode assembly.

The case 120 may form at least a portion of an outer appearance of the battery cell 100 and may accommodate the electrode assembly. For example, the case 120 may provide a space in which the electrode assembly 110 and an electrolyte are accommodated. According to an embodiment, the case 120 may include aluminum and/or stainless steel. The case 120 may be referred to as a can or a housing. The case 120 may have a substantially rectangular parallelepiped shape with at least a portion thereof open. The case 120 may be formed in a substantially rectangular parallelepiped shape. For example, the case 120 may include a plurality of side surfaces (e.g., a narrow surface 120a and a wide surface 120b) and a rear surface 120c.

The cap assembly 130 may be coupled to the case 120. For example, the cap assembly 130 may accommodate the electrode assembly 110 and the electrolyte together with the case 120.

The cap assembly 130 may include a plurality of components. For example, the cap assembly 130 may include a cap plate 131 coupled to the case 120 to seal the case 120 and a terminal plate 132 electrically connected to the electrode assembly 110.

The terminal plate 132 may have a positive or negative polarity. For example, the terminal plate 132 may include a first terminal plate 132a electrically connected to the cathode plate of the electrode assembly 110 and a second terminal plate 132b electrically connected to the anode plate of the electrode assembly 110. According to an embodiment, the first terminal 132a and the second terminal 132b may be arranged substantially parallel to each other.

The components of the cap assembly 130 described above are only an embodiment, and thus, some of the components of the cap assembly 130 may be omitted or other components not described may be added. For example, the cap assembly 130 may include an electrolyte inlet, an electrolyte sealing member, a current collecting plate, an insulating plate, a rivet terminal, and/or a gasket.

The shape of the battery cell 100 illustrated in FIG. 1 is an example. For example, the size of the battery cell 100 and/or the shape of the terminal plate 132 may be changed depending on the design of the battery cell 100.

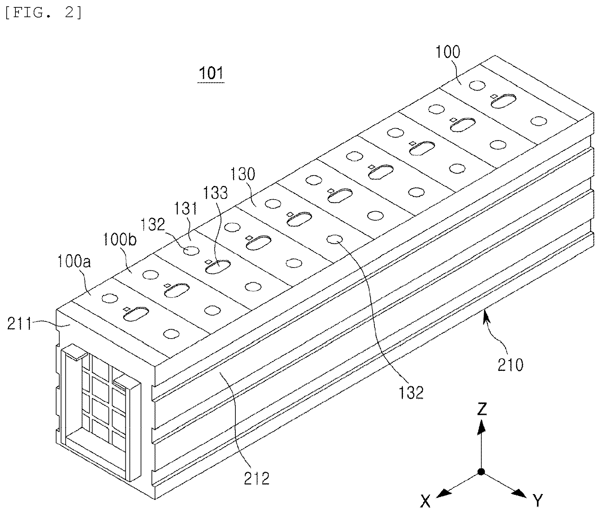

FIG. 2 is a perspective view of a cell assembly, according to an embodiment.

Referring to FIG. 2, a cell assembly 101 may include a plurality of battery cells 100 and a housing 210. The description of the battery cell 100 and the cap assembly 130 of FIG. 1 may be applied to the battery cell 100 and the cap assembly 130 of FIG. 2.

In an embodiment, the cell assembly 101 may include a plurality of battery cells 100 connected to each other by the housing 210. The cell assembly 101 may be referred to as a cell stack. The plurality of battery cells 100 may be arranged in a first direction (e.g., an X-axis direction). For example, the plurality of battery cells 100 may include the first battery cell 100a and the second battery cell 100b positioned in the first direction with respect to the first battery cell 100a. The first battery cell 100a may be disposed to be adjacent to (e.g., in contact with or close to) the second battery cell 100b. According to an embodiment, the battery cell 100 may include a venting portion 133 formed in the cap plate 131 of the cap assembly 130. The venting portion 133 may be positioned between the terminal plates 132.

The housing 210 may form at least a portion of the outer appearance of the cell assembly 101. For example, the housing 210 may surround at least a portion of the plurality of battery cells 100.

The housing 210 may connect or fasten the plurality of battery cells 100 to provide the cell assembly 101. For example, the housing 210 may include an end plate 211 covering both end portions of the plurality of battery cells 100 and a cover 212 connected to the end plate 211 and covering a side surface (e.g., a narrow surface 120b of the case 120) of the plurality of battery cells 100. According to an embodiment, the cover 212 may have both end portions fastened to the end plate 211 and surround at least a portion of one side surface of the plurality of battery cells 100. In an embodiment, the cover 212 may be referred to as a side cover. The cover 212 may include a first cover covering one side surface of the battery cell 100 and a second cover covering the other side surface of the battery cell 100. In an embodiment not illustrated, the cover 212 may be replaced with a band structure. The cap assembly 130 of the battery cell 100 may be exposed to the outside of the housing 210. For example, the housing 210 may cover a portion of the battery cell 100 excluding the cap assembly 130 and the rear surface (e.g., the rear surface 120c of the case 120 of FIG. 1) of the battery cell 100.

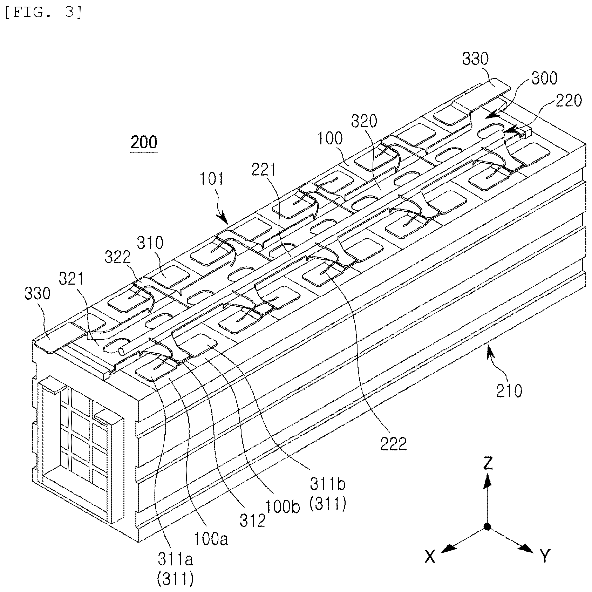

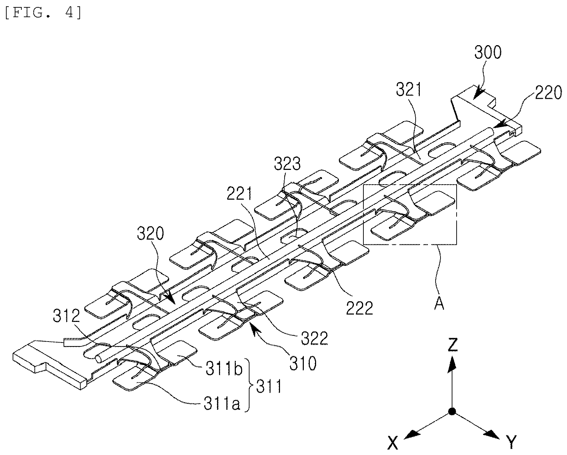

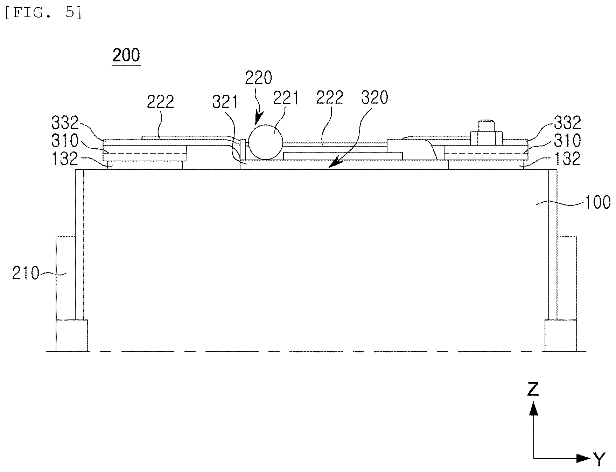

FIG. 3 is a perspective view of a busbar module, according to an embodiment. FIG. 4 is a perspective view of a busbar assembly coupled with a sensor assembly, according to an embodiment. FIG. 5 is a side view of a battery module, according to an embodiment.

Referring to FIGS. 3, 4, and/or 5, a battery module 200 may include the cell assembly 101, a sensor assembly 220, and/or a busbar assembly 300. The description of the battery cell 100 and cell assembly 101 of FIG. 1 and/or FIG. 2 may be applied to the battery cell 100 and cell assembly 101 of FIG. 3, FIG. 4, and/or FIG. 5.

The busbar assembly 300 may be electrically connected to the battery cell 100. For example, the busbar assembly 300 may include a busbar 310 electrically connected to at least one of the plurality of battery cells 100. The busbar 310 may be electrically connected to the terminal plate 132. The busbar 310 may include a connection portion 311 connected to the battery cell 100. For example, the connection portion 311 of the busbar 310 may be bonded to the terminal plate 132 or may be coupled using a fastening member. In an embodiment, the busbar assembly 300 may be referred to as an internal busbar assembly.

The busbar assembly 300 may include a plurality of busbars 310. One busbar 310 among the plurality of busbars 310 may be electrically connected to two battery cells 100.

According to an embodiment, the busbar 310 may be formed in a shape to absorb swelling of the battery cell 100. For example, the busbar 310 may include a first connection portion 311a connected to the first battery cell 100a, a second connection portion 311b connected to the second battery cell 100b, and a buffer portion 312 positioned between the first connection portion 311a and the second connection portion 311b. In an embodiment, the buffer portion 312 may have at least a portion in a curved shape. For example, the buffer portion 312 may protrude toward an upper portion (e.g., in a Z-axis direction) of the busbar assembly 300, as compared to the connection portion 311. The first connection portion 311a may be positioned on substantially the same plane as the second connection portion 311b.

The busbar 310 may be deformed using the buffer portion 312. For example, when the battery cell 100 expands, a distance between the first connection portion 311a and the second connection portion 311b may increase. The buffer portion 312 may be deformed based on a relative movement of the first connection portion 311a with respect to the second connection portion 311b, thereby absorbing at least a portion of the shock caused by the expansion of the battery cell 100. The deformation of the busbar 310 may reduce or prevent damage to the battery module 200.

The busbar assembly 300 may include a busbar holder 320 supporting the busbar 310. In an embodiment, the busbar holder 320 may be referred to as a busbar support member or a busbar frame. According to an embodiment, the busbar holder 320 may be formed of an electrically insulating material. For example, the busbar holder 320 may include a polymer or a resin.

The busbar holder 320 may include a base 321 positioned on the cell assembly 101 and a protrusion 322 extending from the base 321. The busbar holder 320 may include a plurality of protrusions 322. For example, the plurality of busbar holders 320 may respectively extend from both side surfaces of the busbar holders 320. In an embodiment, the protrusion 322 may be formed integrally with the base 321.

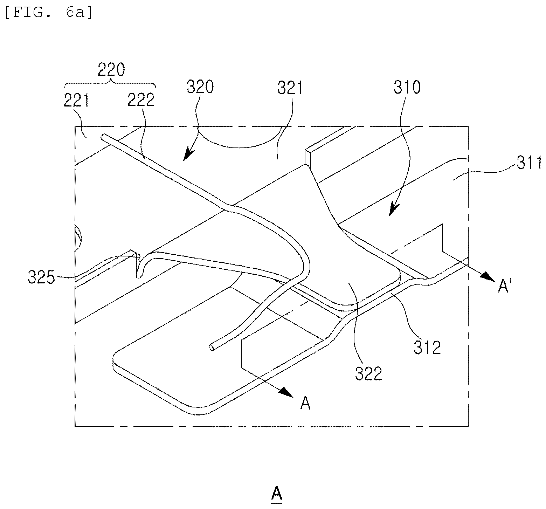

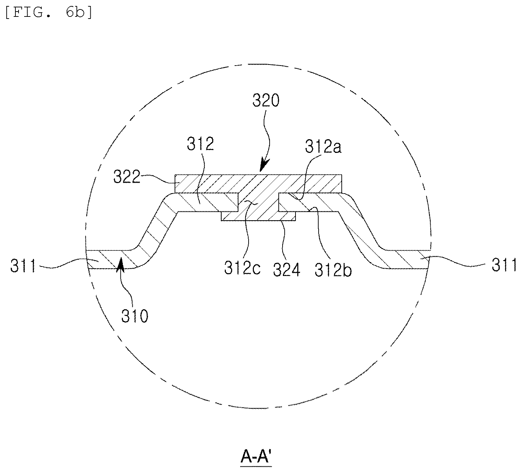

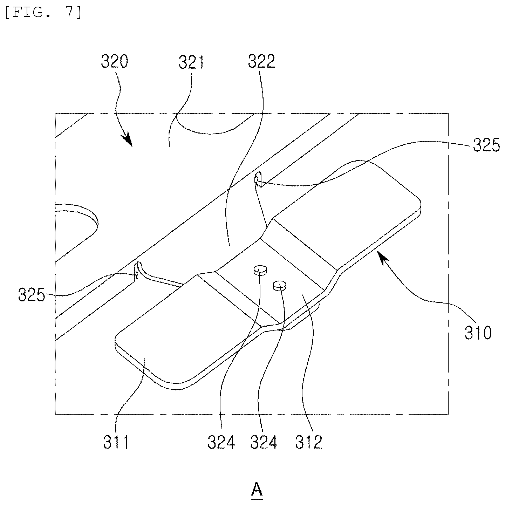

In an embodiment, each of the plurality of protrusions 322 may be coupled to one busbar 310. For example, the protrusion 322 may be coupled to the buffer portion 312 of the busbar 310. The protrusion 322 may be connected to the buffer portion 312 of the busbar 310 by thermal fusion. A coupling structure of the protrusion 322 and the buffer portion 312 is further described below with reference to FIGS. 6A, 6B, and 7.

The busbar holder 320 may have a shape for inducing venting gas generated by the battery cell 100. For example, the busbar holder 320 may include a plurality of venting holes 323 corresponding to the venting portions 133 of the plurality of battery cells 100. The plurality of venting holes 323 may be located above (a +Z-direction) the venting portions 133.

In an embodiment, the busbar assembly 300 may include at least one terminal busbar 330. The terminal busbar 330 may be electrically connected to the exterior of the battery module 200. Current of the battery cell 100 may be transmitted to the exterior of the battery module 200 using the busbar 310 and/or the terminal busbar 330. In an embodiment, the terminal busbar 330 may be referred to as a high voltage busbar.

The sensor assembly 220 may detect an operating status of the battery cell 100 and/or the battery module 200. For example, the sensor assembly 220 may detect at least one of a voltage or a temperature of the battery cell 100 and/or the battery module 200. The sensor assembly 220 may be connected to a battery management system (BMS) to prevent overcharging of the battery cell 100 or to perform voltage balancing. In an embodiment, the sensor assembly 220 may include a temperature sensor (not illustrated) and/or a voltage sensor.

The sensor assembly 220 may be disposed on the busbar assembly 300. For example, the sensor assembly 220 may include a body portion 221 disposed on the busbar holder 320 and a connection portion 222 extending from the body portion 221. The body portion 221 may include a wire, a printed circuit board, or a flexible printed circuit board.

The connection portion 222 may be connected to the busbar 310. For example, the connection portion 222 may detect a voltage of the busbar 310. In an embodiment, the connection portion 222 may be referred to as a voltage sensing terminal. The sensor assembly 220 may include a plurality of connection portions 222. Each of the plurality of connection portions 222 may be in contact with one busbar 310. For example, the connection portion 222 may be connected to the connection portion 311 of the busbar 310.

FIG. 6a is a front perspective view of region A of FIG. 4, according to an embodiment. FIG. 6b is a cross-sectional view taken along line A-A' of FIG. 6a, according to an embodiment. FIG. 7 is a rear perspective view of region A of FIG. 4, according to an embodiment.

Referring to FIGS. 6a, 6b, and/or 7, the busbar 310 may be coupled to the busbar holder 320. The description of the busbar 310, the busbar holder 320, and the sensor assembly 220 of FIGS. 3 to 5 may be applied to the busbar 310, the busbar holder 320, and the sensor assembly 220 of FIGS. 6a, 6b, and/or 7.

The buffer portion 312 of the busbar 310 may include a first surface 312a and a second surface 312b opposite to the first surface 312a. The buffer portion 312 may include at least one through-hole 312c. The through-hole 312c may be a hollow space formed between the first surface 312a and the second surface 312b of the buffer portion 312.

The protrusion 322 of the busbar holder 320 may be disposed on the first surface 311a of the buffer portion 312. At least a portion of the busbar holder 320 may be accommodated in the through-hole 312c. The protrusion 322 of the busbar holder 320 may be accommodated in the through-hole 312c of the buffer portion 312 in a state in which at least a portion of the protrusion 322 is melted by thermal fusion. The protrusion 322 deformed by thermal fusion may be referred to as a fusion portion 324. At least a portion of the fusion portion 324 may be inserted into the through-hole 312c, and the busbar holder 320 may be coupled to the busbar 310 using the fusion portion 324. For example, the protrusion 322 of the busbar holder 320 may be connected to the buffer portion 312 of the busbar 310 using the fusion portion 324. Since the fusion portion 324 is disposed in the through-hole 311c, detachment of the busbar 310 from the busbar holder 320 may be prevented. At least a portion of the fusion portion 324 may be exposed to the outside of the through-hole 311c. For example, at least a portion of the fusion portion 324 may cover a portion of the second surface 311b of the connection portion 311.

Since the busbar 310 and the busbar holder 320 are connected using thermal fusion, noise generated by the busbar 310 may be reduced. The busbar 310 may be formed of a conductive material. For example, the busbar 310 may include copper and/or aluminum. The busbar holder 320 may include an insulating material (e.g., a high molecular polymer, a resin, or a plastic). The busbar holder 320 may include a thermoplastic material. At least a portion of the busbar holder 320 (e.g., at least a portion of the protrusion 322) may be inserted into the through-hole 311c of the busbar 310 in a molten state during a thermal fusion process. For the connection of the busbar holder 320 to the busbar 310, an insulating fastening member (e.g., a bolt) may not be used, and the busbar 310 may be connected to the busbar holder 320 using an insulating material (e.g., the fusion portion 324). The busbar 310 may be electrically connected to a designated component, and short circuits and/or shorts may be prevented.

In an embodiment, the busbar 310 may be connected to the busbar holder 320 using at least one fusion portion 324. For example, one busbar 310 may include the buffer portion 312 including at least one (e.g., two) through-holes 312c. The busbar holder 320 may include a plurality of fusion portions 324 respectively inserted into the through-holes 312c. The busbar holder 320 may be connected to the plurality of busbars 310 among the plurality of fusion portions 324.

In an embodiment, the busbar holder 320 may include a slit 325. The slit 325 may be a groove or recess formed in the base 321. The flexibility of a portion (e.g., the base 321) of the busbar holder 320 may be increased by the slit 325.

In an embodiment, when the battery cell 100 expands, the busbar 310 (e.g., the buffer portion 312) may be deformed or stretched. For example, when the battery cell 100 expands, a distance between the connection portions 311 of the busbar 310 may increase and a height of the busbar 310 may decrease. The protrusion 322 may move in response to the deformation of the busbar 310, while being connected to the buffer portion 312. For example, when the battery cell 100 expands, the protrusion 322 may move downwardly toward the battery cell 100, as compared to before the expansion occurs. The busbar holder 320 may include a plurality of slits 325. The protrusion 322 of the busbar holder 320 may be positioned between the plurality of slits 325. Since the protrusion 322 is positioned between the plurality of slits 325, the flexibility of the protrusion 322 with respect to the base 321 may increase and the damage to the base 321 may decrease.

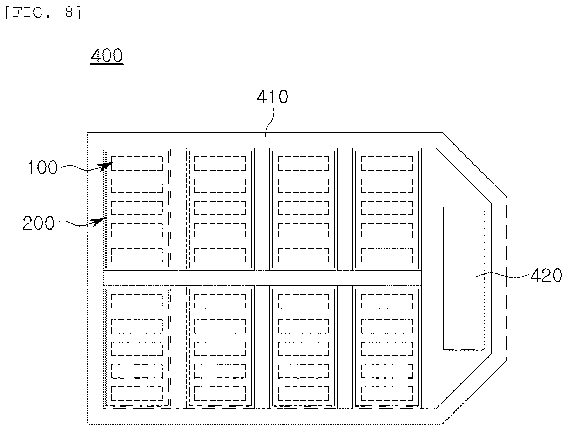

FIG. 8 is a schematic diagram of a battery pack, according to an embodiment.

Referring to FIG. 8, a battery pack 400 may include at least one battery module 200 including a plurality of battery cells 100 and a pack frame 410 accommodating at least one battery module 200. The descriptions of the battery cell 100 and the battery module 200 of FIGS. 1, 2, and/or 3 may be applied to the battery cell 100 and the battery module 200 of FIG. 8.

The pack frame 410 may accommodate a component of (e.g., the battery module 200) the battery pack 400. The pack frame 410 may provide a space for accommodating a plurality of battery modules 200. For example, the pack frame 410 may include a partition wall dividing a space in which the battery modules 200 are accommodated.

The battery pack 400 may include a battery controller 420 controlling the battery module 200. The battery controller 420 may be disposed within the pack frame 410. The battery controller 420 may include a battery management system (BMS). The configuration of the battery controller 420 is known in various forms, so a detailed description thereof will be omitted. In an embodiment, the battery controller 420 may be referred to as a processor.

The above-described contents are merely examples adopting the principles of the present disclosure, and other components may be further included without departing from the scope of the present disclosure.

Although the embodiments of the present disclosure have been described above, the scope of the present disclosure is not limited thereto and it will be apparent to those skilled in the art that various modifications and variations may be made within the scope not departing from the technical idea of the present disclosure described in the claims. For example, the present disclosure may be implemented by deleting some of the components in the above-described embodiments, and the respective embodiments may be implemented in combination with each other.

## Claims

1. A battery module comprising:
a cell assembly including a plurality of battery cells; and
a busbar assembly including a busbar electrically connected to at least one of the plurality of battery cells and a busbar holder including a base positioned on the cell assembly and a protrusion extending from the base and connected to the busbar,
wherein the plurality of battery cells include a first battery cell and a second battery cell adjacent to the first battery cell, and
the busbar includes a first connection portion connected to the first battery cell, a second connection portion connected to the second battery cell, and a buffer portion located between the first connection portion and the second connection portion, and
the protrusion portion is connected to the buffer portion.

2. The battery module of claim 1, wherein
the buffer portion includes a first surface contacting the protrusion, a second surface opposite to the first surface, and at least one through-hole penetrating through the first surface and the second surface, and
the protrusion includes a fusion portion at least partly accommodated within the at least one through-hole.

3. The battery module of claim 1, wherein the buffer portion protrudes upwardly of the busbar assembly, as compared to the first connection portion and the second connection portion.

4. The battery module of claim 1, wherein the busbar holder includes a high molecular polymer or resin, and the busbar includes copper or aluminum.

5. The battery module of claim 1, wherein the busbar holder includes a plurality of slits formed in the base, and the protrusion is located between the plurality of slits.

6. The battery module of claim 1, further comprising a sensor assembly including a body portion disposed on the busbar holder and a plurality of connection portions extending from the body portion and connected to the busbar.

7. The battery module of claim 6, wherein each of the plurality of connection portions is connected to at least one of the first connection portion or the second connection portion of the busbar.

8. The battery module of claim 6, wherein the body portion includes at least one of a wire, a printed circuit board, or a flexible printed circuit board.

9. The battery module of claim 1, wherein the cell assembly includes a housing including an end plate covering both end portions of the plurality of battery cells and a cover connected to the end plate and covering side surfaces of the plurality of battery cells.

10. The battery module of claim 1, wherein
each of the plurality of battery cells includes an electrode assembly, a case accommodating the electrode assembly, and a cap assembly including a cap plate coupled to the case and sealing the case and a terminal plate electrically connected to the electrode assembly, and
the first connection portion and the second connection portion are connected to the terminal plate.

11. The battery module of claim 10, wherein each of the plurality of battery cells includes a venting portion formed in the cap assembly, and the base includes a plurality of venting holes located in an upper portion of the venting portion.

12. The battery module of claim 1, wherein, when the first battery cell or the second battery cell expands, the buffer portion is deformed and a distance between the first connection portion and the second connection portion increases.

13. The battery module of claim 1, wherein the protrusion is connected to the buffer portion using thermal fusion.

14. The battery pack comprising:
at least one battery module;
a pack frame accommodating the at least one battery module; and
a battery controller disposed within the pack frame,
wherein the at least one battery module includes:
a cell assembly including a plurality of battery cells; and
a busbar assembly including a busbar electrically connected to at least one of the plurality of battery cells and a busbar holder including a base positioned on the cell assembly and a protrusion extending from the base and connected to the busbar,
wherein the plurality of battery cells include a first battery cell and a second battery cell adjacent to the first battery cell, and
the busbar includes a first connection portion connected to the first battery cell, a second connection portion connected to the second battery cell, and a buffer portion located between the first connection portion and the second connection portion, and
the protrusion portion is connected to the buffer portion.
